# EUROPEAN PATENT APPLICATION

(11) **EP 1 045 352 A1**
(43) Date of publication of application: **18.10.2000**
(21) Application number: 99302891.9
(22) Date of filing: 14.04.1999
(51) Int. Cl.: G08B 13/12, G06F 1/00

(54) **Enclosure**

(71) Applicant: W L Gore & Associares S.r.l., 20041 Agrate Brianza, Milano (IT)
(72) Inventor: Durigon, Alessandro, 20041 Agrate Brianza Milano (IT)
(74) Representative: Shanks, Andrew

(57) **Abstract**

A tamper respondent enclosure comprises laminates configured with edge portions in overlapping relation and adhered to one another to define an enclosure. A cable passes between overlapping edge portions of the laminate to provide communication between the exterior and interior of the enclosure. The cable comprises a plurality of signal carrying elements located and spaced laterally relative to one another by a carrier and defining apertures between the elements at a portion of the cable passing between the overlapping edge portions. An adhesive material extends through the apertures to adhere the overlapping portions to one another.

## Description

### FIELD OF THE INVENTION

This invention relates to an enclosure, and more particularly to an enclosure cable entry. Embodiments of the invention relate to a cable entry to a tamper respondent enclosure. Other aspects of the invention relate to arrangements for securing flat or ribbon cables to or between surfaces.

### BACKGROUND OF THE INVENTION

Various forms and configurations of tamper respondent enclosures are described in UK Patent Applications Nos. 2,220,513, 2,292,709, 2,254,720, 2,256,957, 2,256,958, 2,258,075, 2,270,785, 2,275,914 and 2,297,540, the disclosures of which are incorporated herein by reference. These documents describe various forms and configurations of laminate which are folded and arranged, with edges overlapping, to define enclosures suitable for the storage and transport of sensitive information. The laminates incorporate layers which are sensitive to attempts to penetrate the laminates or separate the layers of the laminates; the layers may incorporate closely-spaced lines of conductive material forming part of a monitored circuit. The sensitive information contained within the enclosure is typically stored in volatile memory which is erased if an attempt to access the enclosure is detected, for example by virtue of a change in resistance or short circuit in a monitored circuit formed in a laminate. Thus, the enclosure is responsive to attempts to penetrate the enclosure.

It is necessary to provide a means for communicating between the interior and exterior of the enclosure and the communicating means is typically in the form of a ribbon connector, such as low profile polyester ribbon PSE cable as supplied by the applicants, which passes between overlapping portions of the laminate. These overlapping portions are adhered to one another using appropriate adhesive.

It is among the objectives of embodiments of the present invention to provide a secure cable entry arrangement for a tamper respondent enclosure.

### SUMMARY OF THE INVENTION

According to the present invention there is provided a tamper respondent enclosure comprising: one or more laminates configured with edge portions in overlapping relation and adhered to one another to define an enclosure; a cable passing between overlapping edge portions of the laminate to provide communication between the exterior and interior of the enclosure, the cable comprising a plurality of signal carrying elements located and spaced laterally relative to one another by a carrier and defining one or more apertures between at least some of the signal carrying elements at a portion of the cable passing between said overlapping edge portions; and an adhesive material extending through said apertures to adhere said overlapping portions to one another.

According to another aspect of the present invention there is provided a method of producing a tamper respondent enclosure, the method comprising:
configuring one or more laminates with edge portions in overlapping relation to define an enclosure;
providing a cable comprising a plurality of signal carrying elements located and spaced laterally relative to one another by a carrier and defining one or more apertures between at least some of the elements;
passing the cable between said overlapping edge portions such that said one or more apertures are located between said overlapping edge portions; and
providing settable adhesive material at said edge portions whereby said adhesive material flows through said one or more apertures and on setting adheres said edge portions to one another via said apertures.

In use, the present invention facilitates secure joining of overlapping edge portions of the laminates by permitting adhesive material to extend through the cable to improve laminate-to-laminate bonding at the cable location.

The one or more laminates may take any appropriate form and preferably incorporate one or more of the tamper respondent features of the abovementioned patent applications. Preferably, the laminates are flexible and, from an initial planar form, may be folded and overlapped to create an enclosure.

The enclosure may incorporate one or more wall structures in addition to the laminates, such as a moulded casing having wall portions surrounding one or more enclosures defined by the laminates, or a rigid casing of metal or ceramic material. The laminates may be provided separately of the other wall structures, or may be incorporated therewith.

The cable will typically be a low profile cable, such as a ribbon or flat cable. In one embodiment, the cable may be a low profile polyester ribbon cable, such as the PSE (polyester self-extinguishing) cable suppled by W L Gore & Associates. The cable insulation may be of any appropriate material, including polyurethanes, polyamide, polyimide, copolymers of tetrafluoroethylene and hexafluoropropylene, copolymers of tetrafluoroethylene and perfluoropropyl vinyl ether, polyvinylidene fluoride, copolymers of ethylene and tetrafluoroethylene, copolymers of ethylene and cholotrifluoroethylene, thermoset elastomers such as polyorganosilosxanes, polychloroprene, copolymers of acrylonitrile, copolymers of butadiene, polyisoprene, or blends of the foregoing. As used herein the term cable is also intended to encompass connectors and the like which include a plurality of signal carrying elements in spaced relation.

The signal carrying elements will typically be conductors, but may also take other forms, such as optical fibres or conduits. The elements may be provided with individual coatings, for example insulating sheaths. Such coatings may be present at the aperture locations, such that the signal conductors remain isolated from the adhesive material, or may be absent at the apertures such that the signal carrier is in direct contact with the adhesive material. Preferably, the signal carrying elements are flexible.

The carrier will typically be a dielectric, but may take any appropriate form to suit the signal carriers. The carrier may comprise a single unitary structure or may be formed of a plurality of parts. Preferably, the carrier is flexible.

Apertures in the carrier are preferably present between all of the signal carrying elements at a portion of the cable passing between said overlapping edge portions. In a preferred embodiment the apertures are provided by removing all of the carrier across the width of a section of cable. Alternatively, the carrier may be selectively removed from the cable. In a further embodiment the apertures may be provided during formation of the carrier. Preferably, the apertures are provided at a location where the cable passes from between said overlapping portions. Most preferably, the apertures extend externally of said overlapping portions and into an encapsulating outer wall.

The adhesive material may take any suitable form, and may be an adhesive material applied to one or both of the overlapping portions or may form part of one or both of the laminates, for example a surface layer of one of the laminates which has been fluidised. In the preferred embodiment the adhesive material is a settable resin or other flowable material which flows through the apertures in the cable during formation of an outer enclosure around the laminate enclosure. Suitable adhesives include thermoplastic or thermoset polyesters, polyurethanes or polyacrylates, epoxy resins, cyanoester polymers, polyamides, vinyl acetate polymers and co-polymers, vinyl chloride polymers and co-polymers, and polyorganosilioxanes.

According to a further aspect of the present invention there is provided an enclosure comprising: a wall including portions in overlapping relation and bonded to one another; a cable passing between said overlapping wall portions to provide communication across the wall, the cable comprising a plurality of signal carrying elements located and spaced laterally relative to one another by a carrier and defining one or more apertures between at least some of the signal carrying elements at a portion of the cable passing between said overlapping wall portions; and means for joining said overlapping wall portions, said means extending through said one or more apertures.

According to a still further aspect of the present invention there is provided a method of forming an enclosure, the method comprising:
providing an enclosure wall including portions in overlapping relation;
providing a cable comprising a plurality of signal carrying elements located and spaced laterally relative to one another by a carrier and defining one or more apertures between at least some of the signal carrying elements;
passing the cable between said overlapping wall portions to provide communication across the wall; and
joining said overlapping wall portions via said one or more apertures.

The joining means may be adhesive or settable material, or may be one or more pins, staples or other form of joining member.

According to a still further aspect of the present invention there is provided a cable comprising a plurality of signal carrying elements located and spaced laterally relative to one another by a carrier and defining one or more apertures between at least some of the signal carrying elements.

According to another aspect of the present invention there is provided a method of mounting a cable on a surface, the method comprising:
providing a cable comprising a plurality of signal carrying elements located and spaced laterally relative to one another by a carrier and defining one or more apertures between at least some of the signal carrying elements;
positioning the cable on a surface; and
securing the cable to the surface by passing a connector through said one or more apertures.

The connector may be an adhesive, a resin or a suitable settable material, or may be a pin, staple, wrap or other connecting or joining member.

Where the connector is an adhesive, the adhesive may be selected from a range of materials, including thermoplastic or thermoset polyesters, polyurethanes or polyacrylates, epoxy resins, cyanoester polymers, polyamides, vinyl acetate polymers and co-polymers, vinyl chloride polymers and co-polymers, and polyorganosilioxanes.

The adhesive will be selected to provide acceptable bonding to the support member and preferably, but not necessarily, to the cable carrier; the adhesive does not need to bond to the cable carrier or signal carrying elements but preferably closely and tightly encapsulates the cable signal carriers on setting.

The cable carrier may take any suitable form, preferably being selected from polyurethanes, polyamide, polyimide, copolymers of tetrafluoroethylene and hexafluoropropylene, copolymers of tetrafluoroethylene and perfluoropropyl vinyl ether, polyvinylidene fluoride, copolymers of ethylene and tetrafluoroethylene, copolymers of ethylene and cholotrifluoroethylene, thermoset elastomers such as polyorganosilosxanes, polychloroprene, copolymers of acrylonitrile, copolymers of butadiene. polyisoprene, or blends of the foregoing.

The surface on which the cable is mounted may be formed of any suitable material, including but not limited to metallic, organo polymers, wood or other structural material.

### BRIEF DESCRIPTION OF THE DRAWINGS

These and other aspects of the present invention will now be described, by way of example, with reference to the accompanying drawings, in which:
Figure 1 is a cut-away perspective view of a tamper respondent enclosure in accordance with a preferred embodiment of the present invention;
Figure 2 is a plan view of a layer of the tamper respondent laminate of the enclosure of Figure 1;
Figure 3 is a portion of a further layer of the tamper respondent layer of the enclosure of Figure 1, shown greatly enlarged.
Figure 4 is a cut-away perspective view of the opposite end of the tamper respondent enclosure of Figure 1;
Figure 5 is an enlarged sectional view on line 5 - 5 of Figure 4;
Figure 6 is an enlarged sectional view on line 6 - 6 of Figure 4;
Figure 7 is a plan view of a cable in accordance with an embodiment of another aspect of the present invention; and
Figure 8 is a sectional view on line 8 - 8 of Figure 7, and showing the cable of Figure 7 mounted on a surface.

### DETAILED DESCRIPTION OF THE DRAWINGS

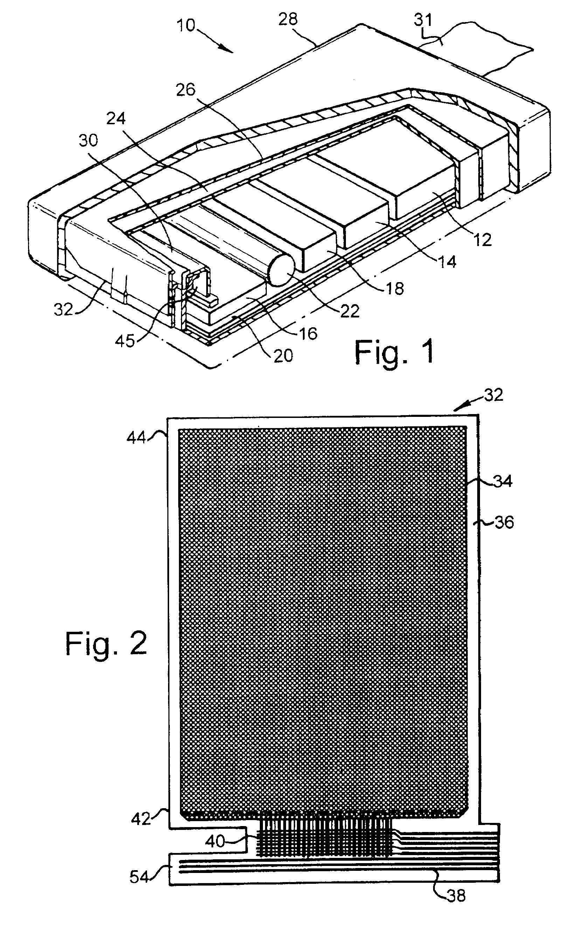

Reference is first made to Figure 1 of the drawings, which illustrates a tamper respondent enclosure 10 in accordance with a preferred embodiment of the present invention. The enclosure 10 contains security sensitive information in an encryption module 12, access to the information stored in the module 12 requiring use of a variable key, the nature of the key required being stored in a memory 14. The enclosure is arranged to detect attempts to tamper with or penetrate the enclosure and contains an enclosure monitor 16 which, if tampering is detected, activates an erase circuit 18 to erase the information stored in the memory 14 and encryption module 12. These components are mounted on and interconnected by a printed circuit board 20, power being provided by a power cell 22.

The walls of the enclosure 10 comprise three primary components: a metal inner enclosure 24; an intermediate enclosure 26 formed of a folded tamper respondent laminate 32; and a moulded outer enclosure 28. The tamper respondent laminate 32 includes various detection layers which are monitored, via a ribbon cable 30, by the enclosure monitor 16. A further ribbon cable 31 provides for communication between the interior and exterior of the enclosure 10. The metal enclosure 24 provides physical protection against sudden violent attempts to penetrate the enclosure 10 and disengage the enclosure monitors 16 or erase circuit 18 before information can be erased from the encryption module.

The tamper respondent laminate 32, and the method by which the enclosure 10 is fabricated, correspond to the laminate and fabrication method as described in UK Patent Application GB 2 275 914. The tamper respondent laminate 32 is initially planar as illustrated in Figure 2 of the drawings. The laminate is formed of a number of separate layers, the outermost delamination respondent layer including a matrix 34 of diagonally extending semiconductive lines screen-printed onto a rectangular, thin insulating film 36. The matrix of lines 34 forms a number of continuous conductors which will be broken if attempts are made to penetrate the film 36. The lines are formed by printing carbon-loaded polyester ink onto the film 36 and selectively connecting the lines on each side at the edges of the film. Connections between the lines and the enclosure monitor 16 are provided by the ribbon cable 30, which is itself formed of further lines 38 of carbon-loaded ink printed onto an extension of the film 36. The connections between the matrix 34 and the cable 30 are made via connectors 40 formed on one edge 42 of the film 36. When the laminate 32 is folded to define the enclosure 26, the edge 42 is overlapped with the opposite edge 44 to form a seam in such a manner that the connectors 40 are contained within the enclosure 26. This allows the cable to pass from the underside of the enclosure 26 (as viewed in Figure 1), though a labyrinth cable entry 45 in the metal enclosure 24, to the monitor 16.

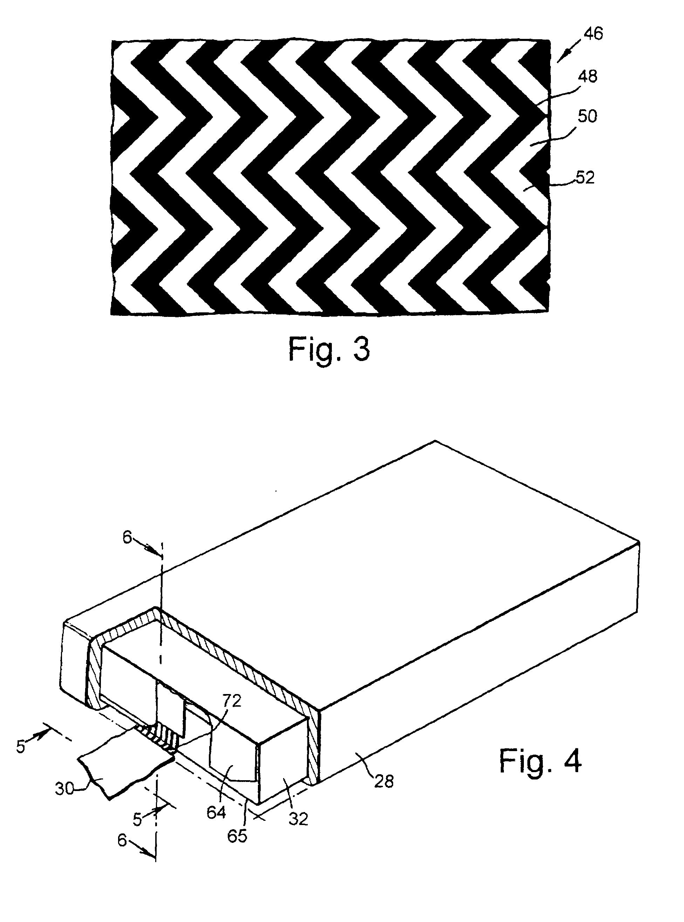

The laminate 32 further includes a laser and pierce respondent layer and a portion of this layer 46 is illustrated in Figure 3 of the drawings. The layer 46 includes tracks 48 of carbon-loaded polyester ink printed onto opposite sides of an electrically insulating film 50. Figure 3 illustrates the tracks 48 on one side of the film 50. The tracks on the opposite side of the film are of the same pattern but are offset to lie directly below the spaces 52 between the tracks 48; the tracks are of a width and pitch (for example 250 and 500 microns) that such piercing of the film 50 at any point results in damage to at least one of the tracks. The tracks are connected in series to define one or more conductors and are connected via lines 54 (Figure 2) to the enclosure monitor 16, which monitors the resistance of the line. Detection of an increase in resistance, caused by cutting of one of the tracks, will cause the information stored on the encryption module 12 to be erased. Providing the tracks 48 in a sawtooth pattern makes it more difficult to cut the film 50 without detection as a slot of any length cut in the film 50 would be sure to cut at least one track 48. Also, it is very difficult to determine the direction of the tracks at any one point on the layer and thus select a suitable slot direction.

The various elements of the laminate 32 are adhered together and then folded around the metal enclosure 24, in a similar manner to a gift wrapping or parcel, to define the inner enclosure 26. Adhesive is provided to retain the folded and overlapping portions in place. The folded laminate 32 is arranged such that the lines forming part of the matrix 34 on one side of the film 36 are exposed on the outer surface of the enclosure 26. A thin layer of adhesive, blackened with a light loading of carbon, is applied to the enclosure 26 and conceals the lines. The enclosure 26 is located within a mould, which is then filled with cold pour polyurethane. The polyurethane is then cured and hardened to form the outer enclosure 28. The resulting moulding is opaque and preferably has a thickness of around 1 - 5 mm. In this example, the outer enclosure 28 completely encapsulates the inner enclosure 26 providing a complete environmental seal, and thus protecting the interior of the enclosure from damp, dust and the like. During the moulding operation, the uncured, liquid polyurethane flows into any gaps or spaces that may have been left after folding the laminate 32. Further, the hardened polyurethane is resilient, having a shore hardness of 70, and thus provides an enclosure which is robust in normal use.

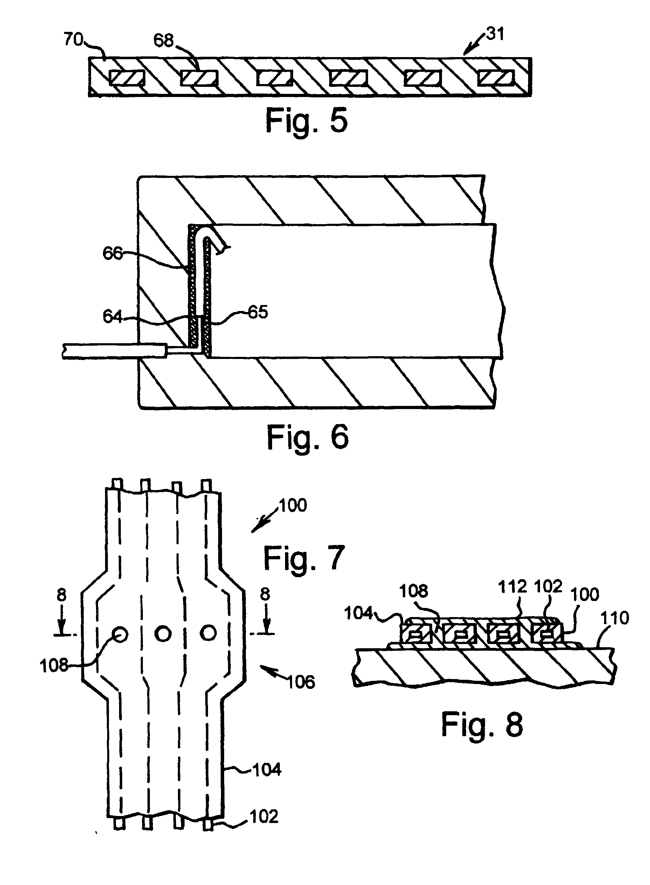

Reference is now also made to Figures 4, 5 and 6 of the drawings, Figures 4 and 6 illustrating the manner in which the ribbon cable 31 enters the intermediate enclosure 26. As noted above, the intermediate enclosure 26 is formed by a folded tamper respondent laminate 32, which is folded and has its edges overlapped to define the enclosure 26. Figure 4 illustrates two laminate edge-portions 64, 65 in overlapping relation, and forming an end wall of the enclosure 26. The laminate portions 64, 65 are securely adhered to one another by an adhesive material 66 selected for compatibility with the laminate.

The ribbon cable 31, shown in section in Figure 5, is a GORE-TEX® expanded PTFE ribbon cable. The ribbon cable 31 comprises a number of flat metal conductors 68 located within an insulating expanded PTFE body or carrier 70. The body 70 is laser stripped from a section of the cable 31, and in particular the section of the cable which is located adjacent the edge of the outer overlapping portion 64. Thus, when the laminated portions 64, 65 are overlapped, the adhesive 66 may extend through the apertures 72 formed between the individual conductors 68 to facilitate provision of a secure join between the laminate portions 64, 65.

Further, when the intermediate enclosure 26 is potted or encapsulated in the outer enclosure 28, the initially fluid material which forms the outer enclosure 28 flows between and around the exposed conductors 68, filling any voids not occupied by the adhesive 66, to provide a very intimate coverage, making it far more difficult to attack and penetrate the enclosure 10.

Of course, care must be taken when stripping the body 70 from around the conductors 68, to ensure that the conductors 68 are not deformed or damaged or brought into contact with one another. Further, the cable 31 must be handled carefully to prevent such damage occurring during the assembly of the enclosure 10. However, once the cable 31 has been incorporated in the enclosure, the exposed conductors 38 are stabilised by the surrounding material 66, 68.

### EXAMPLE

A tamper respondence laminate was produced in accordance with the preferred embodiment described in GB 2,275,914.

GORE-TEX ® Microflat Ribbon Cable available from W L Gore & Associates (UK) Ltd, was then laser stripped with a Transversely Excited Atmospheric (TEA)-CO₂ laser to remove the cable insulation to expose conductors and form apertures in the cable which, when the cable was coupled to the laminate and laminate folded to form an envelope, would coincide with a portion of the wall section of the laminate and also to extend beyond the wall section of the envelope when formed.

The cable was attached to edge section of the laminate and the laminate folded to form an envelope as described in GB 2,275,914.

About 200g of Ultilfil 3000 Resin were mixed with 50g of Ultilfil 3000 catalyst (both available from AEV plc of Wallasey, Merseyside, England) by stirring gently to minimise entrapment of air in the mixture.

In the base of a moulded flame retardant ABS box of wall thickness 0.75 mm, length 170 mm, width 110 mm and depth 20 mm, having a stepped profile at each end of the form of inside ledges 5 mm high and 5 mm wide, sufficient of the mixture (about 30g) was placed to form a layer approximately 1 mm thick over the base of the box.

The tamper respondent laminate, folded to form an envelope as described in GB 2,275,914, was placed centrally in the box between the ledges.

The edges of the moulded box protruded at least 1 mm above the level of the top surface of the envelope. The box and enclosure were placed in a mechanical clamping jig to ensure correct position of the envelope and the cables exiting from it. The jig and envelope assembly were placed in a circulating air oven for twenty minutes at 50°C to cause at least partial setting of the resin-catalyst mixture.

After twenty minutes the assembly was removed from the oven and allowed to cool to about 25°C and further resin-catalyst mixture poured into the box to cover completely the envelope and the portion of the cable from which the insulation had been selectively removed.

Any entrained air in the resin was removed by directing the exit air stream form a heat gun, set at 200°C, to the surface of the resin to cause the entrained air to expand and dissipate through the surface of the resin as bubbles. When most of the entrained air had been removed, as evidenced by the cessation of bubbles forming, the jig and encapsulated envelope assembly were replaced in the circulating air oven at 50°C for a one hour and thirty minutes.

After removal from the oven the encapsulated envelope was allowed to cool to ambient temperature and the integrity of the bonding of the cable to the envelope and encapsulating resin checked by attempting to mechanically detach the cable from the encapsulated envelope.

It was not possible to detach the cable from the module without breaking the cable.

It will be clear to those of skill in the art that the above-described embodiment and specific example are merely exemplary of this aspect of the present invention, and that various modifications and improvements may be made thereto, without departing from the present invention. For example, the above-described embodiment illustrates flat conductors, and of course flat ribboned cables incorporating round conductors may also be utilised. Further, the above embodiment utilises laser stripping or ablation to remove the carrier 70 from around the conductors 68, and in other embodiments of the invention this may be achieved by, for example, dissolving the body 70 by application of an appropriate solvent. Further, it would of course also be possible to manufacture ribbon cable in which apertures were already provided between the conductors 68 at one or more selected sections of the cable.

Thus it will further be apparent to those of skill in the art that by utilising this aspect of the invention it becomes possible to mount or bond a cable using an adhesive material which would not normally bond effectively to the cable body as described below. Alternatively, it may be possible to use small pins, or staples or the like and having legs extending through the apertures in the ribbon cable to secure the cable to a surface.

Reference is now made to Figures 7 and 8 of the drawings, Figure 7 illustrating a cable 100 in accordance with another aspect of the invention. The cable 100, in the form of a flat ribbon cable, comprises four signal carrying elements, in the form of conductors 102, located relative to one anther by dielectric carrier 104. At spaced locations 106 along the length of the cable 100 the conductors 102 are spaced apart laterally by a greater extent, allowing the provision of apertures 108 between the individually insulated conductors 102.

The aperture locations 106 are useful for mounting the cable 100 on a surface, particularly a surface which is non-compatible with the carrier 104, or more particularly a surface which is not compatible with adhesive suitable for use with the carrier 104, as illustrated in Figure 8 of the drawings. The Figure shows the cable 100 mounted on a surface 110 utilising a settable material 112 which bonds securely to the surface 100, but which need not bond securely to the carrier material 104; the adhesive material 112 flows through the apertures 108 and over the carrier surface, and after setting physically secures the cable 100 to the surface 110.

## Claims

1. A tamper respondent enclosure comprising: one or more laminates configured with edge portions in overlapping relation and adhered to one another to define an enclosure; a cable passing between overlapping edge portions of the laminate to provide communication between the exterior and interior of the enclosure, the cable comprising a plurality of signal carrying elements located and spaced laterally relative to one another by a carrier and defining one or more apertures between at least some of the elements at a portion of the cable passing between said overlapping edge portions; and an adhesive material extending through said apertures to adhere said overlapping portions to one another.

2. The enclosure of claim 1, wherein the laminate incorporates one or more tamper respondent features.

3. The enclosure of claim 1 or 2, wherein the laminate is flexible.

4. The enclosure of claim 1, 2 or 3, wherein the enclosure incorporates one or more wall structures in addition to the laminates.

5. The enclosure of claim 4, wherein a further wall structure is provided by a casing of hardened settable material having wall portions at least partially surrounding the enclosure defined by the laminate.

6. The enclosure of claim 4 or 5, wherein a further wall structure is provided by a rigid metal casing.

7. The enclosure of any of the preceding claims, wherein the cable is a low profile cable.

8. The enclosure of any of the preceding claims, wherein the signal carrying elements are conductors.

9. The enclosure of any of the preceding claims wherein the signal carrying elements are flexible.

10. The enclosure of any of the preceding claims, wherein the carrier is a dielectric.

11. The enclosure of any of the preceding claims, wherein the carrier is flexible.

12. The enclosure of any of the preceding claims wherein apertures are present between all of the signal carrying elements at a portion of the cable passing between said overlapping edge portions.

13. The enclosure of claim 12, wherein there is no carrier present across the width of said portion of cable.

14. The enclosure of any of the preceding claims, wherein said one or more apertures are provided at a location where the cable passes from between said overlapping portions.

15. The enclosure of claim 14, wherein said one or more apertures extend externally of said overlapping portions and into an encapsulating outer wall portion.

16. The enclosure of any of the preceding claims, wherein the adhesive material is a settable material utilised in the formation of an outer enclosure around the laminate enclosure.

17. A method of producing a tamper respondent enclosure, the method comprising:
configuring one or more laminates with edge portions in overlapping relation to define an enclosure;
providing a cable comprising a plurality of signal carrying elements located and spaced laterally relative to one another by a carrier and defining one or more apertures between at least some of the elements;
passing the cable between said overlapping edge portions such that said one or more apertures are located between said overlapping edge portions; and
providing flowable adhesive material at said edge portions whereby said adhesive material flows through said one or more apertures and to adhere said edge portions to one another via said apertures.

18. The method of claim 17, wherein the laminate is flexible and is initially provided in planar form and then folded and overlapped to create an enclosure.

19. The method of claim 17 or 18, wherein an outer wall structure is formed around the laminate enclosure.

20. The method of claim 19, wherein the outer wall structure is formed by application of a settable material to said laminate enclosure.

21. The method of any of claims 17 to 20, wherein said one or more apertures are formed by removing carrier material from the cable.

22. The method of claim 21, wherein all of the carrier material is removed across the width of a section of cable.

23. The method of claim 21 or 22, wherein the carrier is removed from the cable by laser stripping.

24. The method of any of claim 17 to 23, wherein the adhesive material is a settable material which flows through said one or more apertures in the cable on formation of an outer enclosure of said settable material around the laminate enclosure.

25. A tamper respondent enclosure comprising: one or more laminates configured with edge portions in overlapping relation and adhered to one another to define an enclosure; an outer wall portion at least partially encapsulating the enclosure, said outer wall portion comprising a settable material; a cable passing between overlapping edge portions of the laminate and through the outer wall portion to provide communication between the exterior and interior of the enclosure, the cable comprising a plurality of signal carrying elements located and spaced laterally relative to one another by a carrier and defining one or more apertures between at least some of the elements at a portion of the cable passing between said overlapping edge portions; said settable material of the outer wall portion extending through said apertures to adhere said overlapping portions to one another.

26. A method of producing a tamper respondent enclosure, the method comprising:
configuring one or more laminates with edge portions in overlapping relation to define an enclosure;
providing a cable comprising a plurality of signal carrying elements located and spaced laterally relative to one another by a carrier and defining one or more apertures between at least some of the elements;
passing the cable between said overlapping edge portions such that said one or more apertures are located between said overlapping edge portions;
providing settable material around the enclosure to at least partially encapsulate said enclosure and flow through said one or more apertures; and
permitting the material to set and thus adhere said edge portions to one another via said apertures.

27. An enclosure comprising: a wall including portions in overlapping relation and bonded to one another; a cable passing between said overlapping wall portions to provide communication across the wall, the cable comprising a plurality of signal carriers located and spaced laterally relative to one another by a carrier and defining one or more apertures between at least some of the signal carriers at a portion of the cable passing between said overlapping wall portions; and means for joining said overlapping wall portions, said means extending through said one or more apertures.

28. A method of forming an enclosure, the method comprising:
providing an enclosure wall including portions in overlapping relation;
providing a cable comprising a plurality of signal carrying elements located and spaced laterally relative to one another by a carrier and defining one or more apertures between at least some of the signal carrying elements;
passing the cable between said overlapping wall portions to provide communication across the wall; and
joining said overlapping wall portions via said one or more apertures.

29. A cable comprising a plurality of signal carrying elements located and spaced laterally relative to one another by a carrier and defining one or more apertures between at least some of the elements.

30. A method of mounting a cable on a surface, the method comprising:
providing a cable comprising a plurality of signal carrying elements located and spaced laterally relative to one another by a carrier and defining one or more apertures between at least some of the elements;
positioning the cable on a surface; and
securing the cable to the surface by passing a connector through said one or more apertures.
